# EUROPEAN PATENT APPLICATION

(11) **EP 4 760 853 A1**
(43) Date of publication of application: **17.06.2026**
(21) Application number: 25742066.1
(22) Date of filing: 13.01.2025
(51) Int. Cl.: H01M 10/058, H01M 10/04, H01M 10/42, G05B 19/418, H01M 10/052

(54) **SECONDARY BATTERY MANUFACTURING SYSTEM**

(30) Priority: 16.01.2024 KR 20240006416
(71) Applicant: LG Energy Solution, Ltd., Seoul 07335 (KR)
(72) Inventor: LEE, Seok Hun, Daejeon 34122 (KR); PARK, Kyoung Chan, Daejeon 34122 (KR); LEE, Sung Gyu, Daejeon 34122 (KR); JUNG, Tae Kwang, Daejeon 34122 (KR); KIM, Min Su, Daejeon 34122 (KR); PARK, Yeong Heon, Daejeon 34122 (KR); LEE, Hee Won, Daejeon 34122 (KR); KIM, Jeong Jin, Daejeon 34122 (KR); HAN, Hyung Wook, Daejeon 34122 (KR); JANG, Seong Won, Daejeon 34122 (KR)
(74) Representative: BCKIP Part mbB
(86) International application number: PCT/KR2025/000733
(87) International publication number: WO 2025/155050

(57) **Abstract**

According to exemplary embodiments, a secondary battery manufacturing system is provided. The system comprises: a data matrix reader configured to read a data matrix of a cell case, configured to capture an unrecognized image including the data matrix having failed to be read, and configured to match the unrecognized image with a virtual CAN ID; a first server configured to store the unrecognized image transmitted from the data matrix reader, and a second server configured to determine a feature interfering with the reading of the data matrix on the basis of the unrecognized image transmitted from the first server.

## Description

### [Technical Field]

The present disclosure relates to a secondary battery manufacturing system. This application claims the benefit of priority from Korean Patent Application No. 10-2024-0006416, filed on Jan. 16, 2024, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Secondary batteries are manufactured through an electrode process, assembly process, and activation process. In order to improve the yield and reliability of the secondary battery manufacturing process, it is important to ensure traceability of the manufacturing process. Therefore, various studies have been conducted to ensure the traceability of the secondary battery manufacturing process.

### [Summary]

### [Technical Problem]

The problem addressed by the technical ideas of the present disclosure is to provide a secondary battery manufacturing system with increased traceability.

### [Technical Solution]

According to exemplary embodiments of the present disclosure to address the above problems, a secondary battery manufacturing system is provided. The system includes: a data matrix reader configured to read a data matrix of a cell case, configured to take an unrecognized image comprising the data matrix with read failure, and configured to match the unrecognized image with a virtual can ID; a first server configured to store the unrecognized images transmitted from the data matrix reader; and a second server configured to determine features that interfere with the reading of the data matrix based on the unrecognized image transmitted from the first server.

The title of the unrecognized image includes the virtual can ID.

The first server is a Network Attached Storage.

The second server includes a deep learning model configured to determine the features of the data matrix based on the unrecognized image.

The second server is configured to generate classification data by matching the symbols representing the features with the virtual can IDs.

The system further includes a third server configured to store the classification data.

The third server is configured to transmit to the client device, in response to a request from a client device, a Uniform Resource Locator (URL) including the unrecognized image, the classification data, and a source code for displaying metrics based on the classification data.

The data matrix reader is configured to capture the unrecognized image by receiving illumination light from a ring-shaped illuminator irradiated onto the data matrix.

The features of the unrecognized image include: contamination of the data matrix by an electrolyte, contamination of the data matrix by a substance different from the electrolyte, darkness of the unrecognized image, closeness of spacing of the cell cases in the unrecognized image, diffuse reflections, scratches on the data matrix, non-formation of the data matrix in the cell case, absence of the cell case in the unrecognized image, timing error of the acquisition trigger of the data matrix reader, and misalignment of the data matrix reader.

The data matrix reader is configured to take the unrecognized image by receiving illumination light irradiated onto the data matrix from a spot illuminator.

The features of the unrecognized image include: contamination of the data matrix by an electrolyte, contamination of the data matrix by a substance different from the electrolyte, closeness of spacing of the cell cases in the unrecognized image, scratches on the data matrix, non-formation of the data matrix in the cell case, absence of the cell case in the unrecognized image, timing error of the acquisition trigger of the data matrix reader, the data matrix being out of focus of the data matrix reader, and a reading timeout of the data matrix reader.

The data matrix reader is configured to take an unrecognized image of the data matrix by receiving illumination light irradiated onto the data matrix from an illuminator including a cylindrical lens.

The features in the unrecognized image include: contamination of the data matrix by an electrolyte, contamination of the data matrix by a substance different from the electrolyte, scratches on the data matrix, non-formation of the data matrix in the cell case, absence of the cell case in the unrecognized image, timing error of the acquisition trigger of the data matrix reader, the data matrix being out of focus of the data matrix reader, and a reading timeout of the data matrix reader.

### [Advantageous Effects]

A secondary battery manufacturing system according to exemplary embodiments of the present disclosure may be configured to generate classification data indicative of features that cause failures in the reading of the data matrix. Accordingly, monitoring of cell traceability may be provided, and further high precision cell tracking may be provided.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a block diagram illustrating a secondary battery manufacturing system according to exemplary embodiments.
FIGS. 2 through 4 are drawings illustrating an optical system for imaging a data matrix.
FIG. 5 is a flowchart to illustrate a method for manufacturing a secondary battery according to exemplary embodiments.
FIG.6 illustrates a secondary battery manufacturing system according to other exemplary embodiments.
FIG.7 illustrates a secondary battery manufacturing system according to other exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best explain his disclosure.

Accordingly, it is to be understood that the embodiments described herein and the configurations shown in the drawings are only the most preferred embodiments of the disclosure and do not represent all of the technical ideas of the disclosure, and that there may be various equivalents and modifications that may be substituted for them at the time of filing the present application.

Furthermore, in describing the disclosure, specific descriptions of relevant disclosed configurations or features are omitted where it is believed that such detailed description would obscure the essence of the disclosure.

Because the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

### (First embodiment)

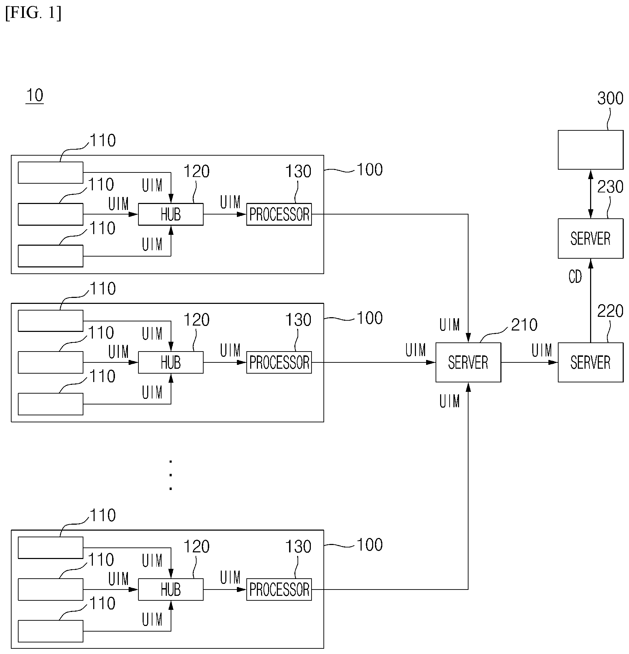

FIG. 1 is a block diagram illustrating a secondary battery manufacturing system 10 according to exemplary embodiments.

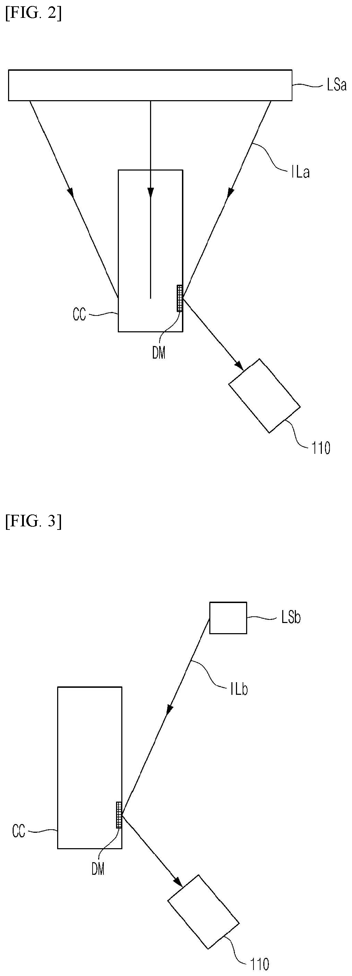

FIGS. 2 through 4 are drawings illustrating an optical system for imaging a data matrix (DM).

Referring to FIG. 1, a secondary battery manufacturing system 10 according to exemplary embodiments may include a plurality of secondary battery manufacturing facilities 100, servers 210, 220, 230, and a client device 300.

Referring to FIGS. 1 and 2, the secondary battery manufacturing facilities 100 may be configured to perform an assembly process of a secondary battery. The secondary battery manufacturing facility 100 may be configured to perform an assembly process of, for example, a can-type battery of a secondary battery. The can-type battery may include a cell case CC and an electrode assembly within the cell case CC. The secondary battery manufacturing facilities 100 may include a plurality of data matrix readers 110, a hub 120, and a processor 130.

The cell case CC may be a metal can. The cell case CC may be one of a cylindrical can or a prismatic can. The electrode assembly may include a wound structure of a positive electrode, a negative electrode, and a separator, or may include a stack of positive electrodes, negative electrodes, and separators. The positive electrode may include a positive electrode current collector and a positive electrode active material, and the negative electrode may include a negative electrode current collector and a negative electrode active material.

The thickness of the positive electrode current collector may be in the range from about 3 µm to about 500 µm. The positive electrode current collector may have a high conductivity and may not cause chemical changes in the final manufactured secondary battery. The positive electrode current collector may include, for example, stainless steel, aluminum, nickel, titanium, calcined carbon, and aluminum. The positive electrode current collector may also include stainless steel with a surface treated with carbon, nickel, titanium, silver, or the like. The surface of the positive electrode current collector may include a micro-irregular structure to increase adhesion of the active material. The positive electrode current collector may have the shape of a film, sheet, foil, net, porous, foam, nonwoven, or the like.

The thickness of the negative electrode current collector may be in the range of about 3 µm to about 500 µm. The negative electrode current collector may not cause chemical changes in the final manufactured secondary battery and may have a high conductivity. The negative electrode current collector may include copper, stainless steel, aluminum, nickel, titanium, calcined carbon, and aluminum-cadmium alloys. The negative electrode current collector can also include stainless steel with a surface treated with carbon, nickel, titanium, silver, or the like. The surface of the negative electrode current collector may include a micro-irregular structure to increase adhesion of the active material. The negative electrode current collector may have the shape of a film, sheet, foil, net, porous, foam, nonwoven, or the like.

A positive electrode active material is a material that can cause an electrochemical reaction. The positive electrode active material may be a lithium transition metal oxide. The positive electrode active material may be, for example, a layered compound such as lithium cobalt oxide (LiCoO₂)and lithium nickel oxide (LiNiO₂) substituted with one or more transition metals, a lithium manganese oxide substituted with one or more transition metals, a lithium nickel-based oxide represented by the formula LiNi_{1-y}M_{y}O₂ (where M is any one element among Co, Mn, Al, Cu, Fe, Mg, B, Cr, Zn, and Ga, and 0.01≤y≤0.7), a lithium nickel cobalt manganese complex oxide represented by Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+zN}i_{0.4}Mn_{0.4}Co_{0.2}O₂ (where -0.5≤z≤0.5, 0.1≤b≤0.8, 0.1≤c≤0.8, 0≤d≤0.2, 0≤e≤0.2, b+c+d<1 , M is any one of Al, Mg, Cr, Ti, Si, and Y, and A is any one of F, P, and Cl), and an olivine-based lithium metal phosphate represented by the formula Li₁₊ₓM_{1-y}M'_{y}PO_{4-z}X_{z} (where M is a transition metal, more specifically any one of Fe, Mn, Co, and Ni, M' is any one of Al, Mg, and Ti, and X is any one of F, S, and N; -0.5≤x≤+0.5, 0≤y≤0.5, and 0≤z≤0.1).

The negative electrode active material may include carbon, e.g., anthracite, graphitized carbon, graphite-based carbon, etc. The negative electrode active material may include a metal complex oxide, such as, for example, LiₓFe₂O₃(0≤x≤1), LixWO₂(0≤x≤1), SnₓMe₁₋ₓMe'_{y}O_{z} (where Me is any one of Mn, Fe, Pb, and Ge, Me' is any one of Al, B, P, Si, group 1, 2, and 3 elements of the periodic table, and halogens, and 0<x≤1, 1≤y≤3, and 1≤z≤8). The negative electrode active material may include, for example, a lithium metal, a lithium alloy, a silicon-based alloy, or a tin-based alloy. The negative electrode active material may include metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, and the like. The negative electrode active material may include, for example, conductive polymers such as polyacetylene, Li-Co-Ni based materials, and the like.

In the following, the technical ideas of the present disclosure will be described with reference to an embodiment wherein the cell case CC is a cylindrical can. However, this is for illustrative purposes only and does not in any way limit the technical ideas of the disclosure. A person of ordinary skill in the art will readily arrive at an example where the cell case CC is a prismatic can based on what is described herein.

Each of the secondary battery manufacturing facilities 100 may be configured to perform a series of sub-processes included in the assembly process of the can-type battery. The sub-processes may include: inserting a lower insulating component into the cell case CC; inserting an electrode assembly into the cell case CC; welding the negative electrode tabs of the cell case CC and the electrode assembly; compression molding the upper end part of the cell to reduce the outer diameter of the cell; inserting an upper insulating component into the cell case CC; shaping the cell case CC to reduce the diameter of a step part of the cell case CC for seating of the upper cap assembly; inspecting the cell case CC using X-rays; injecting electrolyte into the cell case CC; welding the cap assembly to the positive electrode tab of the electrode assembly; sealing the battery cell by pressing the cap assembly and gasket together into the cell case CC; pressurizing the battery cell to adjust the height of the cell (e.g, decreasing); marking a lot number on the outside of the cell case CC; measuring the internal resistance of the battery cell based on an open voltage; and unloading the battery cell from the secondary battery manufacturing facility 100 and loading the battery cell onto a tray. Each of the sub-processes may include the reading of a data matrix DM for tracking and recording the sub-process. As a non-limiting example, the data matrix DM may be a two-dimensional barcode.

Reading the data matrix DM may include taking an image of a portion of the cell case CC including the data matrix DM or an image of the entire cell case CC including the data matrix DM, and reading information contained in the data matrix DM from the image. The data matrix DM may be read by a plurality of data matrix readers 110.

Referring to FIG. 2, an illuminator LSa may be configured to illuminate the cell case CC with illumination light ILa. The illuminator LSa may be a ring-shaped illuminator, wherein the illumination light ILa may have a ring-shaped beam cross-section. The illumination light ILa may reach the entire surface of the cell case CC along the periphery of the cell case CC, and the data matrix reader 110 may be configured to take an image of the cell case CC including the data matrix DM based on the illumination light ILa reflected on the surface of the cell case CC.

Referring to FIG. 3, the illuminator LSb may be configured to illuminate the cell case CC with illumination light ILb. Here, the illuminator LSb may be a spot illuminator, and the optics of the illuminator LSb may include a spherical lens, such that the illumination light ILb has a beam cross-section that converges to a spot. The illumination light ILb may reach a portion of the cell case CC including the data matrix DM, and the data matrix reader 110 may be configured to take an image of the cell case CC including the data matrix DM based on the illumination light ILb reflected on a surface of the cell case CC.

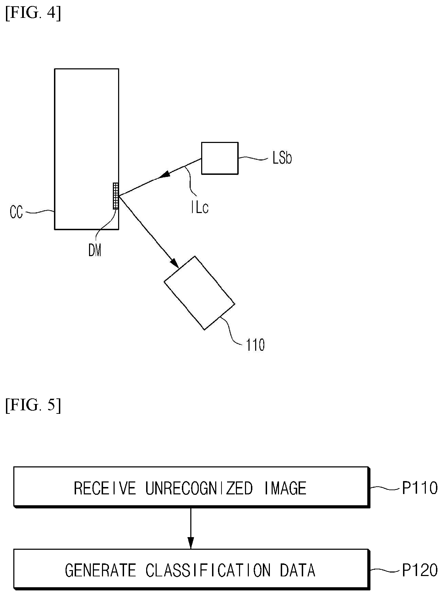

Referring to FIG. 4, an illuminator LSc including a cylindrical lens may be configured to illuminate the cell case CC with illumination light ILc. The illumination light ILc may be linearly focused by the cylindrical lens. The illumination light ILc may reach a portion of the cell case CC including the data matrix DM, and the data matrix reader 110 may be configured to take an image of the cell case CC including the data matrix DM based on the illumination light ILc reflected on a surface of the cell case CC. The illumination light LSc in FIG. 4 may be installed at a lower level compared to the illumination light LSb in FIG. 3. That is, each of the optical systems in FIGS. 3 and 4 are oblique optical systems, but the oblique angle in FIG. 3 may be greater than the oblique angle in FIG. 4. Here, the tilt angle is an angle from the normal to the incident surface of the cell case CC.

Upon successful reading of the data matrix DM, each of the plurality of data matrix readers 110 may be configured to transmit a signal indicative of a can ID to the controller. The controller may be configured to collect can ID data based on the signal and may be configured to transmit the can ID data to the cell tracking network. The can ID may include a plurality of symbols for distinguishing and/or identifying the cell case CC. Here, symbols may refer to any signs, characters, or marks used to represent meaning. In other words, the can ID may include information to identify the cell case CC, and upon reading the data matrix DM by performing a process on the cell case CC, the cell case CC may be matched with the process performed on the cell case CC. Accordingly, historical data may be collected for the cell case CC, and traceability of the secondary battery manufacturing process may be provided.

The controller here may be a programmable logic controller (PLC). A PLC is a special form of microprocessor-based controller that uses programmable memory to store instructions and implement functions such as logic, sequencing, timing, counting, and arithmetic to control machines and processes. PLCs are easy to operate and program.

A controller may include a power supply, a CPU, input interfaces, output interfaces, communication interfaces, and memory devices. The power supply may be configured to provide power to the other elements of the controller, such as the CPU, input interfaces, output interfaces, communication interfaces, and memory devices, for operation of the controller. The memory devices may include read only memory (ROM) configured to store system programs, such as an operating system, and random access memory (RAM) configured to store user programs and data, such as status information of input and output devices, and values of timers, counters, and other internal devices. The CPU may be configured to control communication between modules that implement logic and convert input signals into output behavioral signals. The CPU may operate based on system programs and user programs stored in memory devices. The CPU may be configured to write or read inspection data and measurement data to and from data areas of the memory devices based on the system programs and user programs. Conditions or data from industrial devices and production processes may be transmitted to the CPU via an input module. The results processed by the CPU can be sent to the actuator via the output module. The communication interface may be configured to relay data to and from the controller and the processors 130.

However, without limitation, a controller may include any of the following: a simple controller, a complex processor such as a microprocessor, CPU, GPU, or the like, a processor configured by software, or dedicated hardware and firmware. For example, a controller may be instantiated by a general-purpose computer or application-specific hardware such as a digital signal processor (DSP), field programmable gate array (FPGA), and application specific integrated circuit (ASIC).

In the event of an unsuccessful read of the data matrix DM, the data matrix readers 110 may be configured to generate a virtual can ID and match the virtual can ID to the unrecognized image (UIM). Accordingly, the virtual can ID may be used for storing and retrieving the unrecognized image (UIM). For example, the title of the unrecognized image (UIM) may include the virtual can ID.

Virtual can IDs may have different generation rules (or formats) than can IDs, and virtual can IDs can be easily distinguished from can IDs. For example, a virtual can ID may have a different length than a can ID.

The unrecognized images (UIMs) transmitted from the plurality of data matrix readers 110 may be aggregated at the hub 120, which may be configured to transmit the aggregated unrecognized images (UIMs) to the processor 130. By designing the facility network using the hub 120, the resources required to build the facility network may be reduced, and communication between the plurality of data matrix readers 110 and the processor 130 may be streamlined.

The processor 130 of each of the secondary battery manufacturing facilities 100 may be configured to transmit the unrecognized image (UIM) to a server 210. The server 210 may be configured to store raw data (i.e., images). The server 210 may be configured to store images, such as unrecognized images (UIMs). The server 210 may be, for example, but not limited to, a network attached storage. The server 210 may be configured to further store images taken by vision machines at each of the secondary battery manufacturing facilities 100.

The server 210 may be configured to send the unrecognized image (UIM) to the server 220. The server 220 may be configured to receive the unrecognized image (UIM) from the server 210. The server 220 may be configured to analyze the unrecognized image (UIM) from the server 210. The server 220 may be configured to generate classification data (CD) based on the unrecognized image (UIM). The classification data CD may have a format such as TXT, XLS, and CSV. The server 220 may be configured to determine features that interfere with the extraction of the data matrix of the unrecognized image (UIM). The classification data (CD) may represent features that interfere with the reading of the unrecognized image (UIM). The classification data CD may include features that interfere with the reading of the unrecognized image (UIM) and virtual can IDs matched to the features. The server 220 may be configured to transmit the classification data (CD) to a third server 230.

The features that interfere with the reading of the unrecognized image (UIM) may vary depending on the configuration of the optics of the data matrix reader 110. For example, if the optics of the data matrix reader 110 includes a light source LSa configured to illuminate a ring-shaped illumination light ILa, as shown in FIG. 2, features that interfere with the reading may include contamination of the data matrix DM by electrolyte, contamination of the data matrix DM by electrolyte and other materials, darkness of the unrecognized image (UIM), closeness of the gap between the cell cases (CC), diffuse reflections from elements within the secondary battery manufacturing facility 100, scratches on the data matrix DM, non-formation of the data matrix DM, absence of cell case (CC) in the unrecognized image (UIM), misalignment of optics including the data matrix reader 110, such as an error in the timing of the acquisition trigger of the data matrix reader 110, and tilting of the data matrix reader 110.

As another example, when the optics of the data matrix reader 110 is a light source (LSb) configured to illuminate spot illumination light (ILb), as in FIG. 3, features that interfere with the reading include contamination of the data matrix (DM) by electrolyte, contamination of the data matrix (DM) by electrolyte and other substances, closeness of spacing between cell cases (CC), scratches on the data matrix DM, non-formation of the data matrix DM, absence of cell case (CC) in the unrecognized image (UIM), acquisition trigger timing error of the data matrix reader 110, data matrix DM being out of focus of the data matrix reader 110, and read timeout of the data matrix reader 110.

As another example, when the optics of the data matrix reader 110 is a light source (LSc) configured to illuminate a linear illumination light (ILc), as in FIG. 4, features that interfere with the reading include contamination of the data matrix (DM) by electrolyte, contamination of the data matrix (DM) by substances different from the electrolyte, scratches on the data matrix (DM), non-formation of the data matrix (DM), absence of cell case (CC) in the unrecognized image (UIM), acquisition trigger timing error of the data matrix reader 110, data matrix (DM) being out of focus of the data matrix reader 110, and read timeout of the data matrix reader 110.

According to exemplary embodiments, the server 220 may include a deep learning model configured to determine features that interfere with the reading. The deep learning model of the server 220 may be pre-trained to output as an output, given an unrecognized image (UIM) as input, features that interfere with the reading that appear in the unrecognized image (UIM). The deep learning model of the server 220 may be trained by any one among a supervised method and an unsupervised method.

According to some embodiments, the unrecognized image (UIM) may be matched to an equipment symbol that represents a configuration of the optical system including the data matrix reader 110 from which the unrecognized image (UIM) originated. In one example, the deep learning model of the server 220 may be configured to classify the unrecognized image (UIM) in different modes based on the equipment symbol. For example, the deep learning model of the server 220 may include a first mode configured to generate classification data (CD) based on the unrecognized image (UIM) originating from the optical system of FIG. 2, a second mode configured to generate classification data (CD) based on the unrecognized image (UIM) originating from the optical system of FIG. 3, and a third mode configured to generate classification data (CD) based on the unrecognized image (UIM) originating from the optical system of FIG. 4.

As another example, the server 220 may include separate deep learning models for each configuration of the optical system including the data matrix reader 110. For example, the server 220 may include a first deep learning model configured to generate classification data (CD) based on the unrecognized image (UIM) derived from the optical system of FIG. 2, a second deep learning model configured to generate classification data (CD) based on the unrecognized image (UIM) derived from the optical system of FIG. 3, and a third deep learning model configured to generate classification data (CD) based on the unrecognized image (UIM) derived from the optical system of FIG. 4.

As another example, the server 220 may include a deep learning model that operates in a single mode independent of the configuration of the optical system including the data matrix reader 110 from which the unrecognized image (UIM) was derived.

The server 230 may be configured to receive and store the classification data (CD) from the server 220. The server 230 may be, for example, a data warehouse, and may store the classification data CD for a long period of time, such as based on the warranty period of the product. Accordingly, tracking of the manufacturing process over the life cycle of the product may be provided.

The servers 210, 220, 230 may include physical servers or cloud servers. The servers 210, 220, 230 may be instantiated as virtual servers, but are not limited thereto. The servers 210, 220, 230 may provide data and analytics results to the operator via various frameworks. The frameworks may include protocols that support data transfer to allow client devices to visualize the data through a user interface and provide updated visualizations as the data is calculated by the servers 210, 220, 230. The protocols supporting the data transfer may use HTML, JavaScript, and/or JSON.

The servers 210, 220, 230 may include various application programming interfaces (APIs) for storing data in databases and other data management tools. The APIs may also be used to retrieve data from databases in various data management systems. Data management systems can provide access to databases, pull data from databases, retrieve data, and generate metrics. In this context, metrics are tools for visualizing data. Metrics include time-series generated measurements and can be used to monitor applications and generate status alerts.

The client device 300 may send a request to the server 230 to make inquiries about the unrecognized image (UIM), classification data (CD), and metrics based on the classification data (CD). The server 230 may be configured to retrieve the classification data CD and generate metrics based on the classification data CD in response to the request from the client device 300. The server 230 may be configured to send an API request to the server 210 for loading the unrecognized image (UIM). The API request may be sent via the server 220, or alternatively, the API request may be sent directly from the server 230 to the server 210.

Here, the metrics based on the classification data (CD) may be represented by graphs and tables on the recognized (or unrecognized) data matrix (DM) rate by facility, the recognized (or unrecognized) data matrix (DM) rate by sub-process, and the unrecognized contribution rate by feature that interferes with the reading of each facility.

The server 230 may be configured to send a uniform resource locator (URL) (or, schema), which includes source code for displaying the unrecognized image (UIM), classification data (CD), and metrics based on the classification data (CD) on the client device 300, to the client device 300. The client device 300 can access the source code for visualizing and displaying the unrecognized image (UIM), the classification data (CD), and the metrics based on the classification data (CD) via the URL (or, schema).

The processor 130 and servers 210, 220, 230 may be instantiated as hardware, firmware, software, and combinations thereof. For example, the processors 130 and servers 210, 220, 230 may include computing devices such as workstation computers, desktop computers, laptop computers, tablet computers, and the like. The processors 130 and servers 210, 220, 230 may include any one of simple controllers, complex processors such as microprocessors, CPUs, GPUs, etc., processors configured by software, and dedicated hardware and firmware. The processors 130 and servers 210, 220, 230 may be instantiated by, for example, general purpose computers or application specific hardware such as digital signal processors (DSPs), field programmable gate arrays (FPGAs), and application specific integrated circuits (ASICs).

The operations of the processor 130 and the servers 210, 220, 230 may be instantiated as instructions stored on a machine-readable medium that can be read and executed by one or more processors. Here, the machine-readable medium may include any mechanism for storing and/or transmitting information in a form readable by a machine (e.g., a computing device). For example, the machine-readable medium may include read only memory (ROM), random access memory (RAM), magnetic disk storage media, optical storage media, flash memory, electrical, optical, acoustic, or other forms of propagated signals (e.g., carrier waves, infrared signals, digital signals, etc.), and any other signals.

The processor 130 and servers 210, 220, 230 may be configured with firmware, software, routines, and instructions to perform the foregoing operations, or any of the processes described herein. For example, the processor 130 and servers 210, 220, 230 may be instantiated in memory.

The client device 300 may be any device for communicating with the server 230, such as a workstation computer, laptop, notebook, desktop, mobile device such as a tablet, smartphone, and wearable device. The client device 300 may be configured to generate a request to make inquiries about the classification data (CD), unrecognized images (UIM), and metrics based thereon. The client device 300 may include input tools for entering the request and a display device for displaying the classification data, unrecognized images (UIMs), and metrics based thereon.

The secondary battery manufacturing system 10 may instantiate a plug-in architecture with APIs for data acquisition to provide plug-and-play connectivity of sensors, instruments, and inspectors. Accordingly, resources at a particular process step and at a particular site may be easily transferred to other processes and other sites, or new resources may be easily introduced at each process step and site.

In some embodiments, the secondary battery manufacturing system 10 may further include a manual input system that allows for operator input of manufacturing data. The secondary battery manufacturing system 10 may allow for operator data entry using an input tool and computer-based entry of manufacturing data, such as scraping an excel file. The manual input system may be, for example, a human-machine interface (HMI) of a supervisory control and data acquisition (SCADA) system. SCADA can typically include a combination of software and hardware, such as PLCs and Remote Terminal Units (RTUs). The HMI is the main element of a SCADA system, as it is the screen that enables the operator to communicate with the SCADA system. Manual input by the HMI can include, for example, selecting defect types and reflecting performance upon completion.

### (Second embodiment)

FIG. 5 is a flowchart to illustrate a method for manufacturing a secondary battery according to exemplary embodiments.

Referring to FIGS. 1 and 5, at P110, an unrecognized image (UIM) may be received. The unrecognized image (UIM) may be received by a server 220. The server 220 may be configured to retrieve and load the unrecognized image UIM stored on the server 210 based on the virtual can ID.

Next, at P120, the classification data (CD) may be generated. The classification data CD may be generated by a deep learning model on the server 220. Generating the classification data CD may include determining features of the unrecognized image (UIM) that prevent the data matrix (DM) from being read, and matching symbols representing the features with virtual can IDs of the unrecognized image (UIM).

### (Third embodiment)

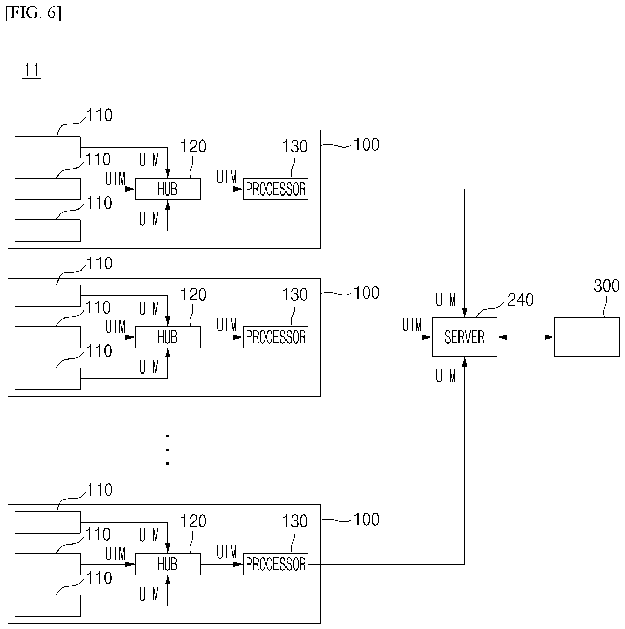

FIG. 6 illustrates a secondary battery manufacturing system 11 according to another exemplary embodiment.

Referring to FIG. 6, the secondary battery manufacturing system 11 according to exemplary embodiments may include a plurality of secondary battery manufacturing facilities 100, a server 240, and a client device 300.

The plurality of secondary battery manufacturing facilities 100 and client devices 300 are substantially the same as those described with reference to FIGS. 1 through 4, and thus duplicative description of them is omitted.

The server 240 may be an integrated server. The server 240 may be configured to perform the functions of each of the servers 210, 220, and 230 of FIG. 1. According to exemplary embodiments, the server 240 may be a network-attached storage configured to store unrecognized images (UIMs), may be configured to generate classification data (CDs, see FIG. 1) based on the unrecognized images (UIMs), may be configured to store the classification data (CDs, see FIG. 1), and may be configured to transmit a Uniform Resource Locator (URL) (or, schema) to the client device 300 that includes source code for displaying the unrecognized image (UIM), the classification data (CD, see FIG. 1), and metrics based on the classification data (CD, see FIG. 1) on the client device 300 in response to a request from the client device 300.

### (Fourth embodiment)

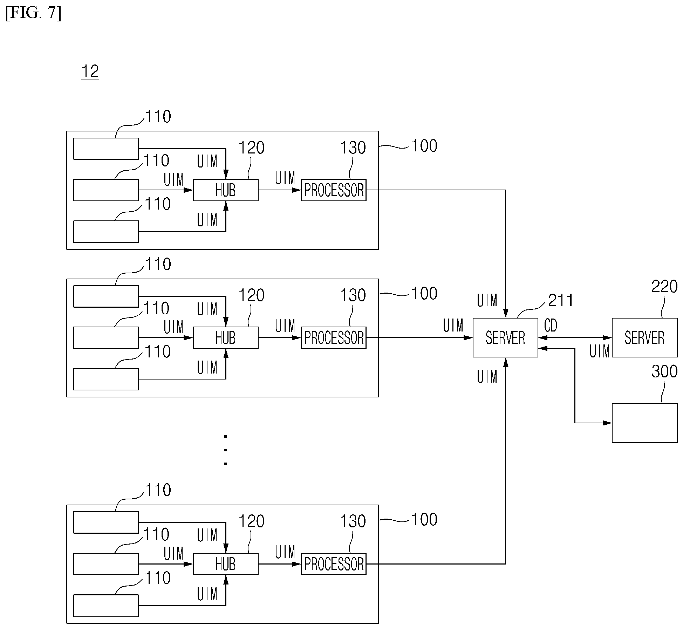

FIG. 7 illustrates a secondary battery manufacturing system 12 according to another exemplary embodiment. Referring to FIG. 7, the secondary battery manufacturing system 12 according to exemplary embodiments may include a plurality of secondary battery manufacturing facilities 100, servers 211, 220, and client devices 300.

The plurality of secondary battery manufacturing facilities 100, server 220, and client device 300 are substantially the same as those described with reference to FIGS. 1 through 4, and thus duplicative description of them is omitted.

The server 211 may be network-attached storage configured to store unrecognized images (UIMs), similar to the server 210 of FIG. 1. The server 211 may be configured to store classification data (CD) generated by the server 220. The server 211 may be configured to send a Uniform Resource Locator (URL) (or, schema) to the client device 300 that includes source code for displaying the unrecognized image (UIM), the classification data (CD, see FIG. 1), and metrics based on the classification data (CD, see FIG. 1) on the client device 300 in response to a request from the client device 100.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A secondary battery manufacturing system comprising:
a data matrix reader configured to read a data matrix of a cell case, configured to take an unrecognized image comprising the data matrix with read failure, and configured to match the unrecognized image with a virtual can ID;
a first server configured to store the unrecognized images transmitted from the data matrix reader; and
a second server configured to determine features that interfere with the reading of the data matrix based on the unrecognized image transmitted from the first server.

2. The secondary battery manufacturing system of claim 1, wherein
a title of the unrecognized image comprises the virtual can ID.

3. The secondary battery manufacturing system of claim 1, wherein
the first server is a network attached storage.

4. The secondary battery manufacturing system of claim 1, wherein
the second server comprises a deep learning model configured to determine the features of the data matrix based on the unrecognized image.

5. The secondary battery manufacturing system of claim 1, wherein
the second server is configured to generate classification data by matching symbols representing the features with the virtual can IDs.

6. The secondary battery manufacturing system of claim 5, further comprising:
a third server configured to store the classification data.

7. The secondary battery manufacturing system of claim 6, wherein
the third server is configured to transmit to the client device, in response to a request from a client device, a Uniform Resource Locator (URL) comprising the unrecognized image, the classification data, and a source code for displaying metrics based on the classification data.

8. The secondary battery manufacturing system of claim 1, wherein
the data matrix reader is configured to capture the unrecognized image by receiving illumination light from a ring-shaped illuminator irradiated onto the data matrix.

9. The secondary battery manufacturing system of claim 8, wherein
the features of the unrecognized image comprise: contamination of the data matrix by an electrolyte, contamination of the data matrix by a substance different from the electrolyte, darkness of the unrecognized image, closeness of spacing of the cell cases in the unrecognized image, diffuse reflections, scratches on the data matrix, non-formation of the data matrix in the cell case, absence of the cell case in the unrecognized image, timing error of the acquisition trigger of the data matrix reader, and misalignment of the data matrix reader.

10. The secondary battery manufacturing system of claim 1, wherein
the data matrix reader is configured to take the unrecognized image by receiving illumination light irradiated onto the data matrix from a spot illuminator.

11. The secondary battery manufacturing system of claim 10, wherein
the features of the unrecognized image comprise: contamination of the data matrix by an electrolyte, contamination of the data matrix by a substance different from the electrolyte, closeness of spacing of the cell cases in the unrecognized image, scratches on the data matrix, non-formation of the data matrix in the cell case, absence of the cell case in the unrecognized image, timing error of the acquisition trigger of the data matrix reader, the data matrix being out of focus of the data matrix reader, and a reading timeout of the data matrix reader.

12. The secondary battery manufacturing system of claim 1, wherein
the data matrix reader is configured to take an unrecognized image of the data matrix by receiving illumination light irradiated onto the data matrix from an illuminator comprising a cylindrical lens.

13. The secondary battery manufacturing system of claim 12, wherein
the features in the unrecognized image comprise: contamination of the data matrix by an electrolyte, contamination of the data matrix by a substance different from the electrolyte, scratches on the data matrix, non-formation of the data matrix in the cell case, absence of the cell case in the unrecognized image, timing error of the acquisition trigger of the data matrix reader, the data matrix being out of focus of the data matrix reader, and a reading timeout of the data matrix reader.
